# EUROPEAN PATENT APPLICATION

(11) **EP 3 358 798 A1**
(43) Date of publication of application: **08.08.2018**
(21) Application number: 17154760.7
(22) Date of filing: 06.02.2017
(51) Int. Cl.: H04L 27/26, H04J 11/00, H04L 25/03

(54) **RECEIVER, TRANSMITTER, COMMUNICATION SYSTEM FOR SUBBAND COMMUNICATION AND METHODS FOR SUBBAND COMMUNICATION**

(71) Applicant: Fraunhofer-Gesellschaft zur Förderung der angewandten Forschung e.V., 80686 München (DE)
(72) Inventor: DATTA, Rohit, 91058 Erlangen (DE)
(74) Representative: Zimmermann, Tankred Klaus

(57) **Abstract**

Receiver comprising a frequency transformer; wherein the frequency transformer is configured to transform a received signal having a communication bandwidth to output a plurality of first subband signals each having a first bandwidth and wherein the frequency transformer is configured to transform the received signal to output a plurality of second subband signals each having a second bandwidth, wherein the first bandwidth and the second bandwidth differ and wherein the receiver is configured to filter the plurality of first subband signals or the plurality of second of subband signals with pulse shape filters; wherein the receiver is configured to determine a first message based on one or more of the plurality of first subband signals and wherein the receiver is configured to determine a second message based on one or more of the plurality of second subband signals; wherein the communication bandwidth is larger than or equal to the first bandwidth and/or the second bandwidth.

## Description

### Technical Field

The present invention relates to concepts of transmitting and receiving messages using subband signals.

### Background of the invention

In high mobility scenarios, like vehicular communications, robustness in presence of frequency offsets and Doppler frequency is of paramount importance. Standard transmission techniques like Orthogonal Frequency Division Multiplexing (OFDM) are extremely vulnerable to frequency synchronization errors (for example when using narrow subbands).

Carrier synchronization algorithms sync to one carrier offset. They cannot eliminate the effects of Doppler Frequency spread. State of the art techniques to cancel and mitigate frequency synchronous errors in OFDM include polynomial cancellation coding, self-interference cancellation, iterative interference cancellation etc. These techniques necessitate complex receiver structure and are bandwidth inefficient.

In a 5G new radio access network, different use case scenarios are envisaged. In high mobility vehicular scenario or machine type asynchronous communications (MTC), frequency errors are quite significant. Moreover, for 5G non-orthogonal waveform transmission schemes, the receiver structure is quite complex. These schemes also incorporate a self-generated inter carrier interference. A recent OFDM based non-orthogonal waveform is Pulse shaped OFDM (P-OFDM, from Huawei). P-OFDM has self-generated inter carrier interferences.

Due to the aforementioned deficiencies there is a need for an improved concept for transmitting and receiving messages.

### Summary of the invention

Embodiments provide a receiver comprising a frequency transformer. The frequency transformer is configured to transform a received signal having a communication bandwidth to output a plurality of first subband signals each having a first bandwidth. Moreover, the frequency transformer is configured to transform the received signal to output a plurality of second subband signals each having a second bandwidth, wherein the first bandwidth and the second bandwidth differ. Furthermore, the receiver is configured to filter the plurality of first subband signals or the plurality of second of subband signals with pulse shape filters. Moreover, the receiver is configured to determine a first message based on one or more of the plurality of first subband signals and to determine a second message based on one or more of the plurality of second subband signals. In general, the communication bandwidth is larger than or equal to the first bandwidth and/or the second bandwidth.

In embodiments a receiver may be implemented using a flexible Fast Fourier Transform (FFT) as frequency transformer, to receive messages transmitted based on pluralities of subband signals (e.g. the plurality of first subband signals and/or the plurality of second subband signals, which may be obtained from transmitters using Inverse Fast Fourier Transforms (IFFTs) with varying sizes), wherein the subband signals may differ in bandwidth.

Moreover, benefits of the receiver are due to the flexible subband bandwidth used for receiving the first message and the second message. For example, when considering receivers moving relative to a transmitter, subcarriers with a broader bandwidth are less prone to Doppler effects and therefore enable easier reception of messages. However, when a receiver is not moving relative to the transmitter, narrower subband bandwidths may be more suitable as higher data rates may then be easier transmittable due to e.g. simpler equalization and more optimal usage of the individual subcarriers. A more optimal usage may for example be that a subcarrier experiencing low fading is transmitting parts of a message with a higher data rate than subcarriers experiencing strong fading. It may also be noted that enabling a more flexible reception of subband bandwidths may enable transmitters with low computational complexity to coexist in a system with transmitters having high computational complexity using narrower subband bandwidths, as fine segmentation may need more computational power due to the higher number of potential subband signals. Furthermore, using pulse shape filters in the receiver (preferably designed according to pulse shape filters used in a transmitter), is beneficial in reducing inter carrier interference. A suitable choice of pulse shape filters can reduce the inter carrier interference such that subband signals of the first subband signals or the second subband signals have negligible influence on neighboring subband signals or an influence which can be removed by interference cancellation techniques. Pulse shaping filters as for example employed for generalized frequency division multiplexing (GFDM), filter bank multicarrier (FBMC) or pulse-shaped OFDM (POFDM/P-OFDM) improve a peak-to-average power ratio (PAPR) when compared to conventional OFDM based systems, which in turn enables usage of simpler and cheaper power amplifiers in a transmitter.

In embodiments the receiver is configured to remove a first signal component from the received signal, wherein the first signal component is based on the first message, to obtain an enhanced received signal. Furthermore, the receiver is configured to provide the plurality of second of subband signals based on the enhanced received signal. The described embodiments uses so called iterative interference cancellation to achieve easier reception of messages. In other words disturbances in the received signal caused by a another message, e.g. the first message, are first removed before receiving and determining the second message. This iterative cancellation may be continued for further iterations, for example the first message may be determined based on a second enhanced signal which may be obtained by removing components due to the second message.

In embodiments the pulse shape filters are of rectangular shape or of bell shape. Using pulse shape filters of rectangular shape results in original OFDM, i.e. the inter carrier interference is zero. However, using bell shape pulse shape filters may introduce inter carrier interference compared to rectangular shape filters but therefore offers a low peak-to-average power ratio (PAPR) which may be beneficial in combination with common analog power amplifiers commonly used in transmitters.

In embodiments the receiver is configured to filter subband signals of the plurality of first subband signals and/or of the plurality of second subband signals with equalization filters. Equalization filters may at least partially compensate the fading effect (i.e. the superposition of multipath propagation or shadowing which may result in attenuation and/or temporal smearing, i.e. dispersion) of a channel between a transmitter and the receiver and therefore simplify reception or determination of messages.

In embodiments the frequency transformer of the receiver is configured to operate on a basis of a first transformation length (a transformation length may be a discrete Fourier transform size, i.e. the number of orthogonal basis functions which may define the subcarriers or subbands), wherein the first transformation length is configured according to a number of the plurality of first subband signals for receiving the first message. Optionally or additionally, the frequency transformer of the receiver is configured to operate on a basis of a second transformation length, wherein the second transformation length is configured according to a number of the plurality of second subband signals for receiving the second message. The described embodiment is beneficial as a single frequency transformer may be used to segment the received signal into the plurality of first and second subband signals, i.e. using a reconfigurable frequency transformer. The frequency transformer may be configured using variable transformation lengths and thereby enable flexible segmentation of the received signal into subband signals. In other words, hardware or electronics can be saved using only a single frequency transformer instead of several frequency transformers using various transformation length.

In embodiments the receiver is configured to select the first transformation length and the second transformation length based on a predefined first transformation length and a predefined second transformation length. Using predefined transformation length avoids for example the necessity of transmitting the transformation length to the receiver thereby reducing transmission overhead.

In embodiments the receiver is configured to obtain the first transformation length and/or the second transformation length from the received signal. The described embodiment is beneficial for use in scenarios where a high flexibility of subband bandwidths may be necessary. The receiver may during operation switch the subband bandwidths based on a transmitted transformation lengths and may therefore offer easy reconfigurability during operation.

In embodiments the receiver comprises a first frequency transformer operating on a basis of the first transformation length which is configured to obtain the first plurality of subband signals. Moreover, the receiver comprises a second frequency transformer operating on a basis of the second transformation length which is configured to obtain the second plurality of subband signals. Having a receiver with multiple frequency transformers enables parallel segmentation of the received signal based on which subband signals are obtained in parallel. Therefore, a time reduction for receiving messages may be achieved compared to using only one frequency transformer. Enabling faster reception may be especially beneficial for real-time applications (i.e. applications requiring a low delay).

Embodiments provide a transmitter for transmitting a message comprising a frequency transformer. The frequency transformer is configured to transform the message into a transmit signal having a communication bandwidth. Moreover, the frequency transformer is configured to selectively segment the transmit signal into a plurality of first subband signals, or into a plurality of second subband signals. Each of the plurality of first subband signals have a first bandwidth and each of the plurality of second subband signals have a second bandwidth different from the first bandwidth. Furthermore, the transmitter is configured to filter the plurality of first subband signals or the plurality of second of subband signals with pulse shape filters

The described transmitter is beneficial in that it flexibly enables the choice of subband bandwidths through selective segmentation. For example, the described transmitter can, preferably when employed in a device which is moving relative to a receiver, choose to segment the communication bandwidth in broad subbands. Resulting in subband signals which are less susceptible to the Doppler effect, caused by the movement. Therefore, a receiver is able to more easily determine a message being transmitted with said broad subbands. Furthermore, the transmitter may choose to use narrow subbands when it is not moving relatively to a receiver and thereby achieve a flat fading for the individual subband signals which can be equalized easily at a receiver. Furthermore, narrow subbands enable a more flexible distribution of data rate among the individual subbands. Pulse shaping filters as employed for GFDM, FBMC or POFDM improve a peak-to-average power ratio (PAPR) when compared to conventional OFDM based systems, which in turn enables usage of simpler and cheaper power amplifiers in the transmitter. Generally, using suitable pulse shape filters in the transmitter (e.g. filters fulfilling the Nyquist inter symbol interference criterion, e.g. root raised cosine), are beneficial in keeping inter carrier interference small and avoid subband-wise inter symbol interference. A suitable choice of pulse shape filters can reduce the inter carrier interference such that subband signals of the first subband signals or the second subband signals have negligible influence on neighboring subband signals. Moreover, analog power amplifiers may benefit from a suitable choice of pulse shape filters due to a resulting small peak-to-average power ratio (PAPR).

An Idea underlying embodiments is that a transmitter may be designed with a flexible subcarrier bandwidth (for example in OFDM or OFDM based non-orthogonal waveform transmission systems (e.g. Generalized Frequency Division Multiplexing (GFDM) or P-OFDM)). A total system bandwidth (e.g. communication bandwidth) is divided into 'N' sub systems, each with a separate number of subcarriers (wherein on subcarriers individual subband signals are transmitted) (preferred numbers of subcarriers may be a power of 2, i.e. 4,8, 16 etc. for efficient use of a FFT as frequency transformer).

In embodiments of various transmitters, IFFTs are used as frequency transformers, wherein each IFFT spans the entire (or total) system (or communication) bandwidth by using a common sampling period (or rate) (among the various transmitters and a receiver). Each transmitter may segment the communication bandwidth with an individual IFFT size/length (transformation length) (N1, N2, N3, etc) which denotes the number of subcarriers, where a large number generates a narrower subcarrier bandwidth (e.g. subband bandwidth) than a small number.

In embodiments the transmitter is configured to segment the transmit signal into the plurality of first subband signals or into the plurality of second subband signals, based on a predefined transformation length of the frequency transformer. Using predefined transformation length avoids for example the necessity of transmitting the transformation length to the transmitter thereby reducing transmission overhead.

In embodiments the transmitter is configured to segment the transmit signal into the plurality of first subband signals or into the plurality of second subband signals, based on a channel state information. The described embodiment can beneficial use knowledge about the channel to adapt the segmentation accordingly to the state of the channel.

In embodiments the transmitter is configured to use channel state information comprising information about usage of the communication bandwidth. Usage information of the channel can be used to segment the communication bandwidth such that the subbands are obtained which suffer only from little interference due to other users transmitting in the communication bandwidth.

In embodiments the transmitter is configured to use channel state information comprising channel fading information. Using channel fading information is useful to achieve flat fading (i.e. constant fading) with a large (subband) bandwidth such that a segmentation into narrow subbands may not be necessary.

In embodiments the pulse shape filters are of rectangular shape or of bell shape (e.g. root raised cosine). Using pulse shape filters of rectangular shape results in original OFDM, i.e. the inter carrier interference is zero. Using bell shape pulse shape filters may introduce more inter carrier interference compared to rectangular shape filters but therefore may offer a small PAPR which may be beneficial in combination with analog power amplifiers which may be used in the transmitter.

In embodiments of the receiver or the transmitter the plurality of first subband signals and the plurality of second subband signals each cover frequencies which are overlapping. Using overlapping frequencies enables efficient use of the common communication bandwidth. However, subband signals out of the subband signals covering frequencies which are not or only partially overlapping are used to transmit or receive messages to limit self-interference.

In embodiments of the receiver or the transmitter the receiver or the transmitter is configured to choose the first bandwidth or the second bandwidth, such that dividing the communication bandwidth by the first bandwidth or by the second bandwidth yields an integer number. Thereby, a fast implementation of a frequency transformer for segmentation of the communication bandwidth may be used. For example, a fast Fourier transform based on powers of 2 may be used as frequency transformer.

Embodiments provide a communication system for transmitting and receiving messages comprising a receiver (according to a receivers described herein), a first transmitter and a second transmitter. The first transmitter is configured to transmit a first message in a transmit signal having a communication bandwidth in a plurality of first subband signals, and the second transmitter is configured to transmit a second message in a transmit signal having the communication bandwidth in a plurality of second subband signals. The first transmitter and the second transmitter may be transmitters as described herein.

The described communication system is beneficial in that enables coexistence of transmitters using different subband bandwidths. Moreover, each transmitter may chose its subband bandwidth (characterizing the subband signals) as is appropriate for its needs or may be advised for example by the receiver to use subband bandwidths appropriate to the receiver. Therefore, the communication system offers a frequency allocation which is more flexible than conventional systems and is especially suitable in mitigating frequency errors like cause by the Doppler effect.

Embodiments provide a method for receiving messages, comprising transforming a received signal having a communication bandwidth to output a plurality of first subband signals, each having a first bandwidth. Moreover, the method comprises transforming the received signal to output a plurality of second subband signals, each having a second bandwidth, wherein the first bandwidth and the second bandwidth differ. Moreover, the method comprises filtering the plurality of first subband signals or the plurality of second of subband signals with pulse shape filters. Further, the method comprises determining a first message based on one or more of the plurality of first subband signals and determining a second message based on one or more of the plurality of second subband signals. The communication bandwidth is larger than or equal to the first bandwidth and/or the second bandwidth. In embodiments, the method for receiving messages may be supplemented by all features and functionalities described herein with respect to the receiver embodiments.

Embodiments provide a method for transmitting a message, comprising transforming the message into a transmit signal having a communication bandwidth and selectively segmenting the transmit signal into a plurality of first subband signals, or into a plurality of second subband signals. Further, the method comprises filtering the plurality of first subband signals or the plurality of second of subband signals with pulse shape filters. Moreover, each of the plurality of first subband signals have a first bandwidth and each of the plurality of second subband signals have a second bandwidth different from the first bandwidth. In embodiments, the method for transmitting a message may be supplemented by all features and functionalities described herein with respect to the receiver embodiments.

Embodiments provide a method for transmitting and receiving messages, comprising transforming a first message into a transmit signal having a communication bandwidth and segmenting the transmit signal into a plurality of first subband signals. Moreover, the method comprises transforming a second message into the transmit signal and segmenting the transmit signal into a plurality of second subband signals. Moreover, the method comprises filtering the plurality of first subband signals or the plurality of second of subband signals with pulse shape filters. Further, each of the plurality of first subband signals have a first bandwidth and each of the plurality of second subband signals have a second bandwidth different from the first bandwidth and the communication bandwidth is larger than or equal to the first bandwidth and/or the second bandwidth. Furthermore, the method comprises transforming a received signal having the communication bandwidth to output the plurality of first subband signals, transforming the received signal to output the plurality of second subband signals, filtering the plurality of first subband signals with pulse shape filters and filtering the plurality of second subband signals with pulse shape filters. Moreover, the method comprises determining the first message based on one or more of the plurality of first subband signals and determining the second message based on one or more of the plurality of second of subband signals. Such a method may be supplemented by all features and functionalities described herein with respect to the methods for receiving messages and the methods for transmitting a message.

### Brief Description of the Figures

In the following, embodiments of the present invention will be explained with reference to the accompanying drawings, in which:
- Fig. 1: shows a block schematic diagram of a receiver according to an embodiment of the invention;
- Fig. 2: shows a block schematic diagram of a receiver according to an embodiment of the invention;
- Fig. 3: shows a schematic diagram of frequency allocation according to embodiments of the invention;
- Fig. 4: shows a block schematic diagram of a transmitter according to an embodiment of the invention;
- Fig. 5: shows a block schematic diagram of a transmitter according to an embodiment of the invention;
- Fig. 6: shows a block schematic diagram of a communication system according to an embodiment of the invention;
- Fig. 7: shows a flow chart of a method for receiving messages according to an embodiment of the invention;
- Fig. 8: shows a flow chart of a method for transmitting a message according to an embodiment of the invention; and
- Fig. 9: shows a flow chart of a method for transmitting and receiving messages according to embodiments of the invention.

### Detailed Description of the Embodiments

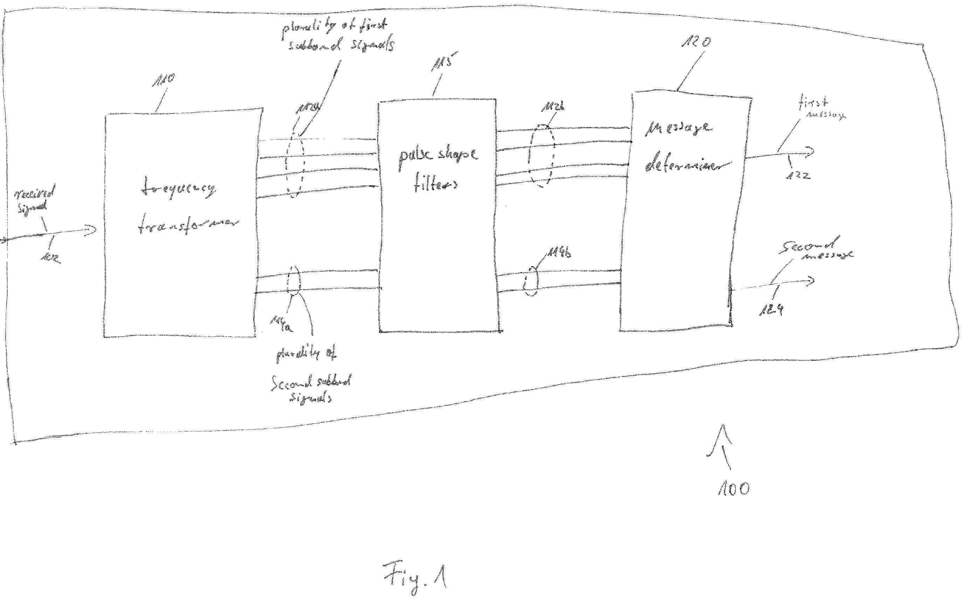

Fig. 1 shows a receiver 100 according to embodiments of the invention. The receiver comprises a frequency transformer 110, pulse shape filters 115 and a message determiner 120.

A received signal 102 having a communication bandwidth is fed to the frequency transformer 110 to obtain a plurality of first subband signals 112 and/or to obtain a plurality of second subband signals 114. Each subband of the plurality of first subband signals 112 comprises a first bandwidth and each subband of the plurality of second subband signals 114 comprises a second bandwidth, wherein the first bandwidth differs from the second bandwidth. The plurality of first subband signals 112a and/or the plurality of second subband signals 114b is provided to the pulse shape filters 115 to revert a filtering commonly performed in a transmitter. Furthermore, the filtered plurality of first subband signals 112b and the filtered plurality of second subband signals 114b are passed to the message determiner 120. The message determiner 120 provides a first message 122 based on the filtered plurality of first subband signals 112b and/or a second message 124 based on the filtered plurality of second subband signals 114b.

Based on the differing subband bandwidths of the pluralities of subband signals the receiver 100 can flexible receive messages from transmitters using varying subband bandwidths. For example, a first transmitter may choose to segment a communication bandwidth of 100MHz into 4 subbands each having 25Mhz and a second transmitter may choose to segment the communication bandwidth into 2 subbands each having 50MHz. The described receiver 100 can flexibly decompose the received signal 102 to obtain the subband signals with varying subband bandwidths transmitted by the transmitters. Further, the receiver 100 may first provide subband signals with 25MHz bandwidth as the plurality of first subband signals and subsequently may provide subband signals with 50MHz bandwidth as the plurality of second subband signals, based on the received signal 102. Alternatively, the receiver 100 may be able to simultaneously retrieve said first and second subband signals based on the received signal 102.

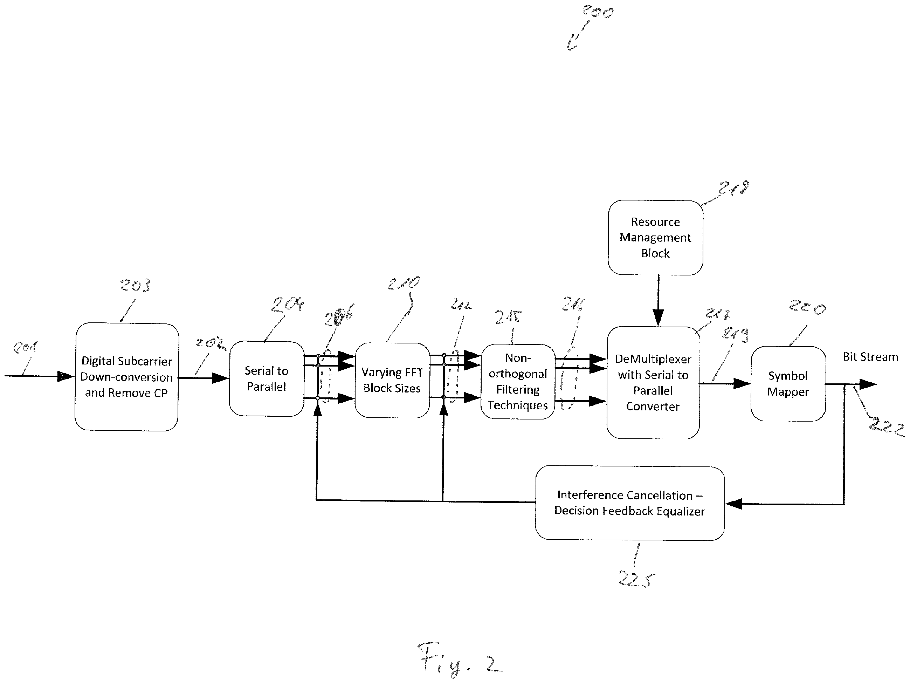

Having the capability to freely choose subband bandwidths enables communication systems (e.g. employing the described receiver 100) which may be more robust for example to the Doppler effect, which is occurring when a receiver and a transmitter are moving relative to each other. Due to the Doppler effect a subcarrier in the case of narrow subbands (which is commonly assumed to be located in the middle of a subband) may be shifted out of the original subband bandwidth and, therefore, may not be retrievable anymore for a receiver with conventional frequency synchronization means. However, using broader subband bandwidths helps to avoid this problem as the frequency of a subcarrier may be less shifted relative to a subband bandwidth. A communication system using for example the receiver 100 can therefore be used to use subband bandwidths when experiencing a strong Doppler spread and revert to narrow subband bandwidths when not. Moreover, using pulse shape filters 115 in the receiver allows for transmitters with an improved PAPR when compared to conventional systems, wherein a small PAPR enables usage of cheap power amplifiers in a transmitter. Furthermore, the receiver 100 may be supplemented by some or all functionalities which are described, in particular, features and functionalities which will be described with respect to receiver 200 in Fig. 2.

Fig. 2 shows a receiver 200 according to embodiments of the invention. The receiver 200 extends the receiver 100 with further optional components. A first processing block 203 comprises digital subcarrier down conversion and CP removal. A further processing block is a serial-to-parallel converter 204. The receiver 200 comprises further a frequency transformer 210, here a FFT with varying block sizes, comparable to the frequency transformer 110. Moreover, the receiver 200 comprises a Non-orthogonal Filtering technique block 215, which may for example perform filtering with pulse shape filters or channel equalization filters. Furthermore, the receiver 200 comprises a demultiplexer 217 which comprises a parallel-to-serial converter. The demultiplexer 217 is controlled through a resource management block 218. Further, the receiver 200 comprises a symbol mapper 220 which is comparable to the message determiner 120. Finally, the receiver 200 comprises also an interference canceller and a decision feedback equalizer both combined in processing block 225.

In digital subcarrier down conversion and CP removal 203 a first received signal 201 is processed. The first received signal 201 may be obtained by first bandpassing an analog antenna signal followed by optional downmixing and analog-to-digital conversion. Digital subcarrier down conversion yields a signal in which the subbands are shifted to a base band and may reduce a sampling rate of the first received signal 201 (optionally including band- or lowpassing). The subband signals may be allocated in appropriate frequency regions in a second received signal 202 for the frequency transformer after processing by the processing block 203. Moreover, a cyclic prefix (CP) may be removed which may be added in the transmitter to combat dispersive effects of the channel (guard interval) and to obtain a linear convolution result from the cyclic convolution obtained from a filtering in the FFT domain. The second received signal 202 is fed to the serial-to-parallel converter 204 to obtain an input block for the Fourier transform performed in the FFT 210. The parallelized received signal 206 is then input to the FFT 210 to obtain a plurality of subband signals 212 (e.g. the first plurality of subband signals 112 or the second plurality of subband signals 114). The plurality of subband signals 212 is subjected to filtering (e.g. with pulse shape filters or equalization filters) in the non-orthogonal filtering technique unit 215 (corresponding to pulse shape filters 115 in receiver 100). The filtering performed in 215 may be aimed at reverting a filtering performed at a transmitter. By choice of appropriate pulse shape filter pairs in a transmitter and the receiver inter carrier interference (i.e. inter subband interference) can be significantly reduced which is introduced by the non-orthogonal filtering (e.g. as performed for GFDM). The filtered plurality of subband signals 216 are input to the demulitplexer 217 which may have obtained knowledge about subband usage through the resource management block 218. Based on the subband usage knowledge the demultiplexer may discard individual subbands knowing that a message was transmitted by a transmitter only on certain subbands. Moreover, the discarded subbands may contain interference, for example from other transmitters, which is best ignored for message determination in the symbol mapper 220. Therefore, the subband signals used to form the serialized subband signal 219 may preferably only contain transmitted components from one transmitter (therefore, unused subband signals may be set to zero in further processing). The symbol demapper 220 then uses the serialized subband signal 219 and demaps this to obtain the bit stream 222, representing the message. For demapping, the demapper 220 may for example use inphase and quadrature demodulation techniques to obtain complex valued signals using for example quadrature amplitude modulation (QAM) or phase shift keying (PSK). The demapper 220 may also employ amplitude shift keying (ASK) wherein information about the message is only obtained from the inphase component (i.e. only real-valued values may be used for determination). Therefrom, the demapper 220 may obtain bits according to a constellation of the employed modulation technique (QAM, PSK, ASK, etc.).

In further iterations the received bitstream 222 (representing for example the first message) is used to remove components thereof in the parallelized received signal 206 and/or in the plurality of subband signals 212. Moreover, in further iterations the FFT 210 may change its block size (transformation length) to enable reception of further transmitters using various FFT block sizes and thereby receive further pluralities of subband signals having potentially varying subband bandwidths. Thereby, messages of further transmitters can be received with higher reception quality as disturbances from other already identified transmitters may have been removed. Compared to receiver 100, receiver 200 preferably performs an iterative reception of the pluralities of subband signals (e.g. the plurality of first subband signals and the plurality of second subband signals). An aspect underlying receiver 200 is a receiver model with adaptive subcarrier bandwidth. Moreover, processing blocks which incorporate more than one functionality (e.g. digital subcarrier downconverter and cyclic prefix remover 203, demultiplexer and serial-to-parallel converter 217, interference canceller and decision feedback equalizer 225 and pulse shape filter and equalizer 215) may be provided in further embodiments as individual processing blocks where only one feature ore functionality may be implemented in.

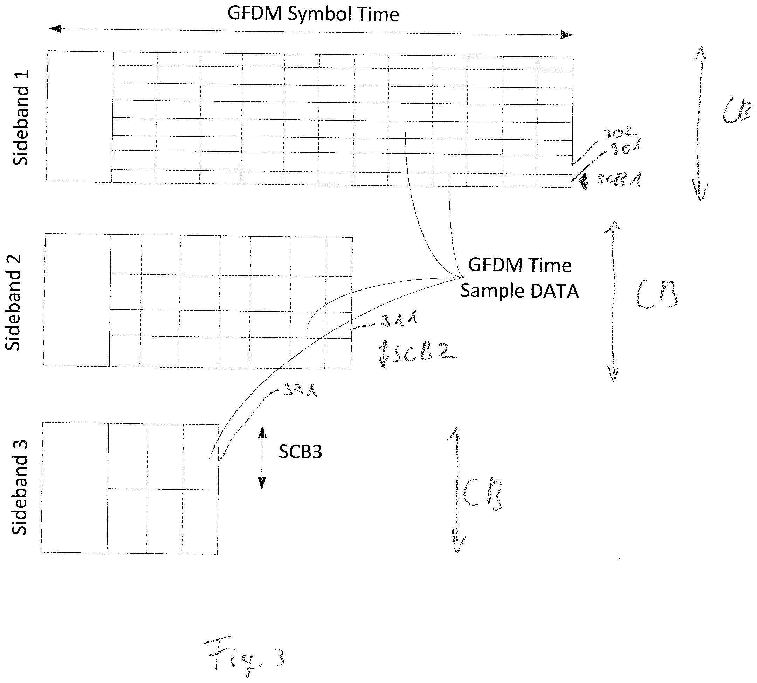

in Fig. 3 a flexible subcarrier bandwidth scheme is shown which illustrates a possible frequency allocation for various transmitters received with for example receivers 100 or 200. Alternatively, the frequency allocation may be used by one transmitter sending multiple messages or a message with different frequency allocations simultaneously. The allocation scheme is presented in Fig. 3 for use in GFDM but may of course also be usable, for example, for OFDM.

Fig. 3 shows 3 sidebands, sideband 1, sideband 2 and sideband 3, which share the same communication bandwidth and are transmitted using the same frequency range. In sideband 1 a division of the communication bandwidth (CB) into 8 subband signals is illustrated. Each subband signal of sideband 1 therefore has a bandwidth which is one eighth of the CB, illustrated by the subcarrier bandwidth 1 (SCB1). In sideband 2 a division of the CB into 4 subband signals is illustrated. Each subband signal of sideband 2 therefore has a bandwidth which is one fourth of the CB, illustrated by the subcarrier bandwidth 2 (SCB2). In sideband 3 a division of the CB into 2 subband signals is illustrated. Each subband signal of sideband 3 therefore has a bandwidth which is half the CB, illustrated by subcarrier bandwidth 3 (SCB3). A possible communication bandwidth could be 8 MHz which would lead to SCB1=1MHz, SCB2=2MHz and SCB3=4MHz. Moreover, due to the nature of GFDM each sideband has a quadratic block size, i.e. for example a block of sideband 1 can be represented as 8x8 matrix. In other words, for example for sideband 1, there are eight subband signals (each having a bandwidth of one eighth of the CB) each comprising 8 time samples (spanning an 8x8 matrix). Therefore, in GFDM a symbol time (length of a block in time samples) is inverse to the subcarrier bandwidth divided by the communication bandwidth (e.g. sideband 1 SCB1/CB=8 symbol time).

Preferably, each of the sidebands are only sparsely populated, i.e. messages are only transmitted on selected subcarriers (using only some of the subband signals) of the sidebands. For example, in sideband 1 a transmitter may only use the subbands 301 and 302, which represent the lower fourth of the CB, in sideband 2 a transmitter may transmit a message using only subband 311 which occupies the second fourth of the CB and in sideband 3 a transmitter may use only subband 321 which occupies the upper two fourths of the CB. Thereby, a non-overlapping frequency allocation pattern is chosen which improves reception quality as interference between the subbands is kept small. However, one may also use an overlapping frequency allocation which may still lead to moderate or sufficient reception quality.

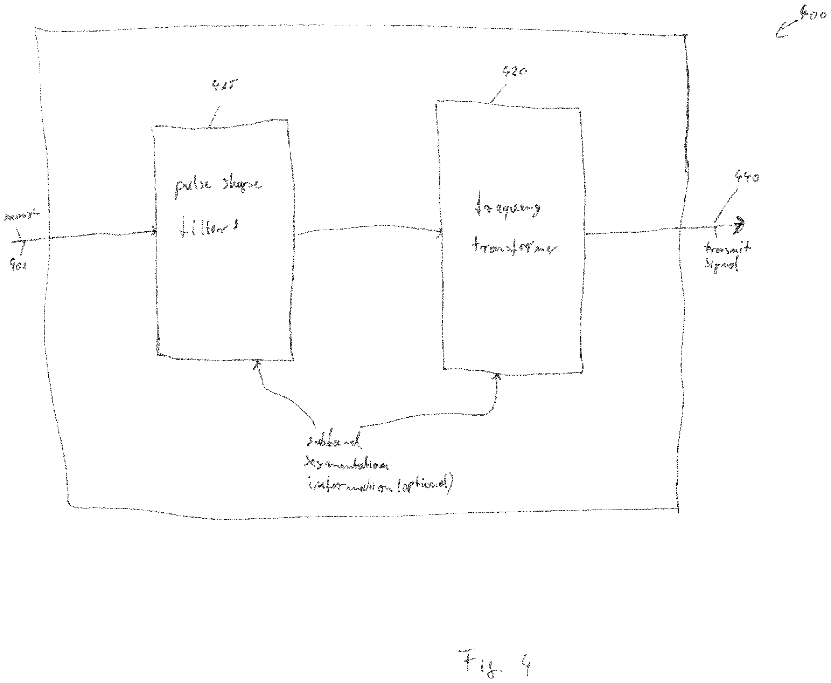

Fig. 4 illustrates a transmitter 400 according to embodiments of the invention. The transmitter 400 comprises a frequency transformer 420 (e.g. a Fourier transformer (preferably an IFFT)) and pulse shape filters 415. Moreover, the transmitter 400 takes a message 401 as input and transmits, using the frequency transformer 420 and the pulse shape filters 415, a transmit signal 440 to a channel.

The frequency transformer 420 is configured to transform the message 401 into the transmit signal 440. Therefore, the pulse shape filters 415 segments the message into equally sized subband signals (with equal bandwidth) in the baseband which in turn are transformed to transmit frequencies by the frequency transformer 420.The transmit signal 440 may be obtained by adding up the individual subband signals (obtained by the frequency transformer 420) and further optional upmixing to a desired carrier frequency. Moreover, the transmit signal 440 has a communication bandwidth (analog to the communication bandwidth CB described with respect to the receivers), which can be selectively segmented into the plurality of first subband signals or the plurality of second subband signals. The segmentation is performed by the frequency transformer 420 and the pulse shape filters 415 which may use an optional subband segmentation information to segment the communication bandwidth. Moreover, the optional subband segmentation information may be based on some control information provided externally by some auxiliary device (e.g. a receiver obtaining channel state information (CSI) from another transmitter or a speed indicator for estimating the Doppler drift). Based on the optional subband segmentation information the transmitter may transmit a first message with a plurality of subband signals having a first bandwidth and transmit a second message with a plurality of subband signals having a second bandwidth, wherein the first and the second bandwidth differ.

Using knowledge for example from channel state information, indicating that non-flat fading channel is observed, i.e. the attenuation is highly varying with frequency, the optional subband segmentation information may indicate to use a finer segmentation yielding narrow bandwidth subband signals exhibiting a flat fading characteristic, i.e. the change of attenuation is only minor within a subband. Moreover, e.g. using speed information the transmitter 400 may perform a coarse segmentation through the pulse shape filters 415 and the frequency transformer 420 when fast movement of the transmitter (relative to a receiver) is indicated (leading to a strong Doppler drift). Coarse segmentation yields broad subbands and therefore increases robustness against Doppler drift by increasing a coherence bandwidth. Moreover, using pulse shape filters 415 helps in obtaining a smaller PAPR than conventional OFDM systems and, therefore, allows the use of simpler (cheaper) power amplifiers in a transmitter (e.g. for radio transmission with a radio frequency RF).

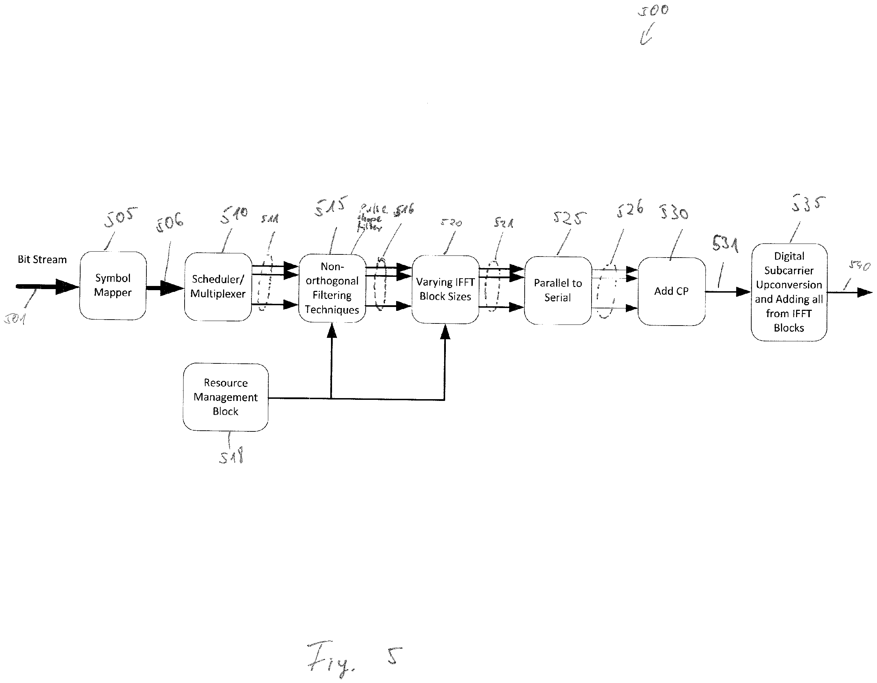

Fig. 5 shows a block schematic diagram of a transmitter 500 according to embodiments of the invention. The transmitter is similar to the transmitter 400 but is supplemented by further optional features and functionalities by which the transmitter 400 may be extended either entirely or individually.

The transmitter 500 comprises a symbol mapper 505, a scheduler/multiplexer 510, a pulse shape filter 515 (labelled Non-orthogonal filtering techniques), an IFFT 520, a parallel-to-serial converter 525, a cyclic prefix adder 530 and a digital subcarrier upconverter 535. Furthermore, the transmitter 500 comprises a resource management block 518.

The transmitter 500 takes as input a message in the shape of a bit stream 501. The bit stream is processed by the symbol mapper 505 to obtain transmit symbols 506. for example QAM, PSK or ASK symbols, representing the message. The transmit symbols 506 are processed in the scheduler/multiplexer 510, allocating transmit symbols 506 to individual subband signals 511, wherein each of the subband signals 511 may at first be baseband signals which are modulated consequently by the IFFT 520 to the individual subband carrier frequency. Before modulation through the IFFT 520 each subband signal 511 is filtered through the pulse shape filter 515. Using pulse shape filters which are bell shaped in the pulse shape filter 515 leads to non-orthogonal OFDM which has the advantage of a lower peak-to-average power ratio (compared to conventional OFDM) which is beneficial for common analog power amplifiers commonly used to transmit signals for example wire-lessly. The filtered subband signals 516 are processed in the IFFT which modulates each of the filtered subband signals from the baseband to its subcarrier frequency. Thereby, a plurality of subband signals 521 is obtained. The plurality of subband signals 521 is serialized by the parallel-to-serial converter obtaining the serialized subband signal 526. The cyclic prefix adder 530 adds a cyclic prefix to the serialized subband signal 526. The cyclic prefix is used on one hand to mitigate to dispersive effects of the channel and on the other hand to linearize the result of the cyclic convolution obtained from the IFFT and FFT, as already described with respect to receiver 200. In a further step the baseband transmit signal 531 is upconverted in the digital subcarrier upconverter 535, to shift the center frequency or the carrier frequency of the communication bandwidth to a higher frequency, suitable for transmission, yielding the transmit signal 540. For upconversion, the digital subcarrier upconverter may upsample, bandpass and upmix the baseband transmit signal. Moreover, the individual subband signals obtained from the IFFT may be added up. In further optional steps, the transmit signal 540 may be digital-to-analog converted, band-passed, upmixed and power amplified to obtain a high frequency transmit signal (e.g. for wireless transmission).

As described with respect to transmitter 400, the transmitter 500 may transmit the communication bandwidth into subbands with varying bandwidth. This is indicated by the IFFT with varying block sizes 520, which obtains information about the block size for example through the resource management block 518. Furthermore, the pulse shape filter 515 is adjusted to the block size of the IFFT. The block size of the IFFT defines the segmentation, for example a IFFT with a block size of 8 may be used to provide 8 subband signals with equal bandwidth which are comprised in a resulting transmit signal. The switching of the block sizes (segmentation) can be performed for the reasons given with respect to receiver 100, receiver 200 or transmitter 400. Further, the transmitter 500 illustrates variable IFFT sizes coupled to Non-orthogonal Filtering Techniques and processing block having multiple functionalities or features (e.g. the scheduler/multiplexer 510 or the digital subcarrier upconverter) may in embodiments be realized as individual processing blocks (e.g. separate scheduler and multiplexer or digital subcarrier upconverter and a adder for adding IFFT blocks).

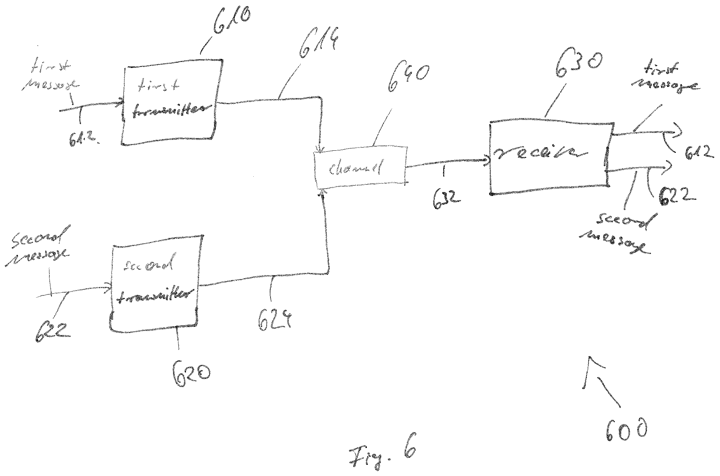

Fig. 6 illustrates a block schematic diagram of a communication system 600, according to embodiments of the invention. The communication system comprises a first transmitter 610, a second transmitter 620 and a receiver 630.

The first transmitter 610 takes a first message 612 and transforms it into a first transmit signal 614 and transmits it into a channel 640. For transformation the first transmit signal 614 is segmented into a first plurality of subband signals and the first message 612 is distributed among the subband signals. The second transmitter 620 takes a second message 622 and transforms it into a second transmit signal 624 and transmits it into the channel 640. For transformation the second transmit signal 624 is segmented into a second plurality of subband signals and the second message 622 is distributed among the subband signals. The subbands of the first subband signals have a first bandwidth which may differ from the second bandwidth of the subbands of the second subband signals. In the channel 640 the first transmit signal 614 and the second transmit signal 624 add up and are received as the received signal 632 through the channel 640 by the receiver 630. The receiver 630 takes the received signal 632 and provides the first message 612 and the second message 622 as output. Therefore, the receiver 630 segments the transmit signal into the first plurality of subband signals, based upon which the receiver 600 obtains the first message 612, and segments the transmit signal into the second plurality of subband signals, based upon which the receiver 600 obtains the second message 622.

The receiver 630 may be a transmitter according to transmitters 100 or 200, and the transmitter 610 and 620 may be transmitters according to transmitters 400 or 500. Moreover, the transmitters 610 and 620 may also be conventional transmitters using different subband bandwidths. The latter is advantageous for using legacy hardware (i.e. transmitters in this case) in new transceiver (transmitter + receiver) systems.

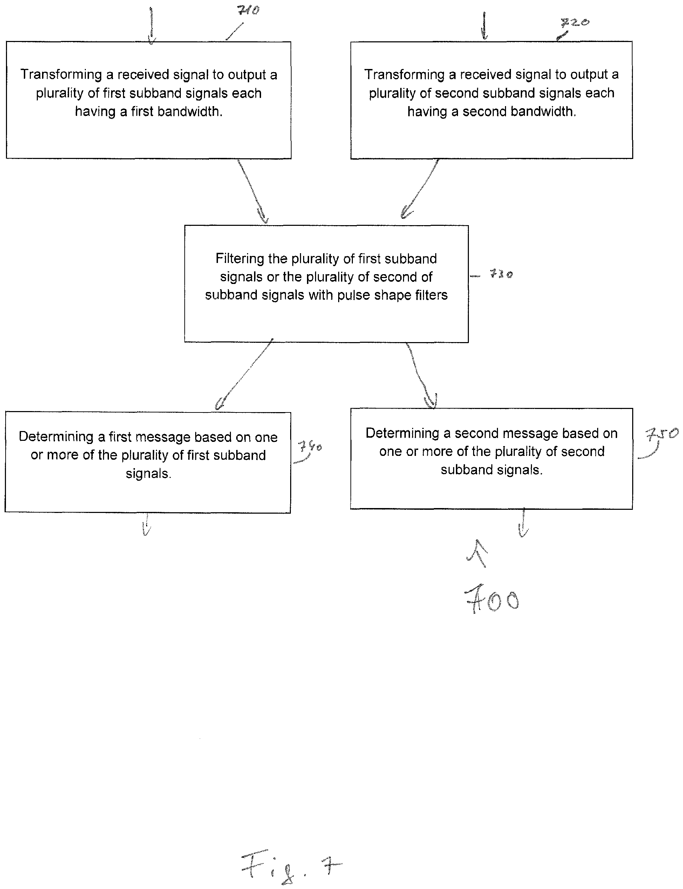

Fig. 7 illustrates a method 700 for receiving messages according to embodiments of the invention. The method 700 comprises transforming 710 a received signal having a communication bandwidth to output a plurality of first subband signals each having a first bandwidth. Further, the method 700 comprises transforming 720 the received signal to output a plurality of second subband signals each having a second bandwidth, wherein the first bandwidth and the second bandwidth differ. Moreover, the method 700 comprises filtering 730 the plurality of first subband signals or the plurality of second subband signals with pulse shape filters. Further, the method 700 comprises determining 740 a first message based on one or more of the plurality of first subband signals and determining 750 a second message based on one or more of the plurality of second subband signals, wherein the communication bandwidth is larger than or equal to the first bandwidth and/or the second bandwidth. The method steps may be performed in various order for example step 720 may be performed before 710 or 750 before 740. Moreover, the second subband signals may be produced 720 only after determining 730 the first message, wherein the first message may be used to increase reception quality of the second message. The method 700 may be performed by receivers 100, 200 or 630.

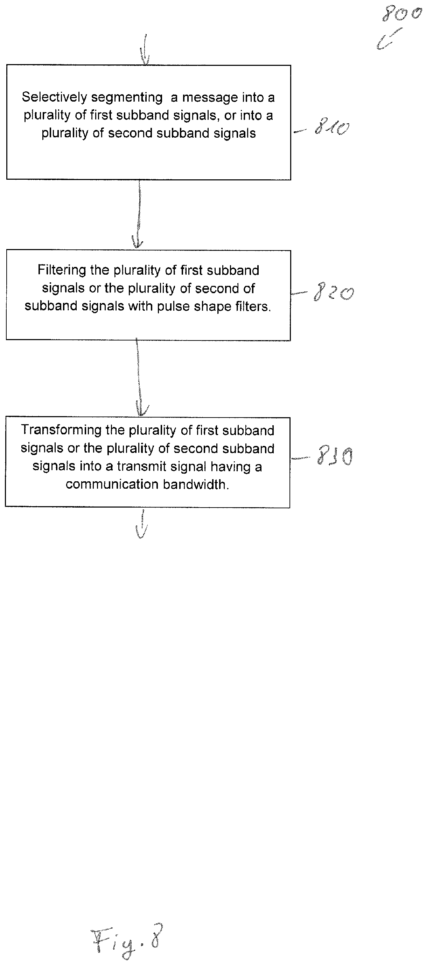

Fig. 8 illustrates a method 800 for transmitting a message according to embodiments of the invention. The method 800 comprises selectively segmenting 810 a message into a plurality of first subband signals, or into a plurality of second subband signals. Further, the method 800 comprises filtering 820 the plurality of first subband signals or the plurality of second subband signals with pulse shape filters. Moreover, the method 800 comprises transforming 830 the plurality of first subband signals or the plurality of second subband signals into a transmit signal having a communication bandwidth. The method 800 may be performed by transmitters 400, 500, 610 or 620.

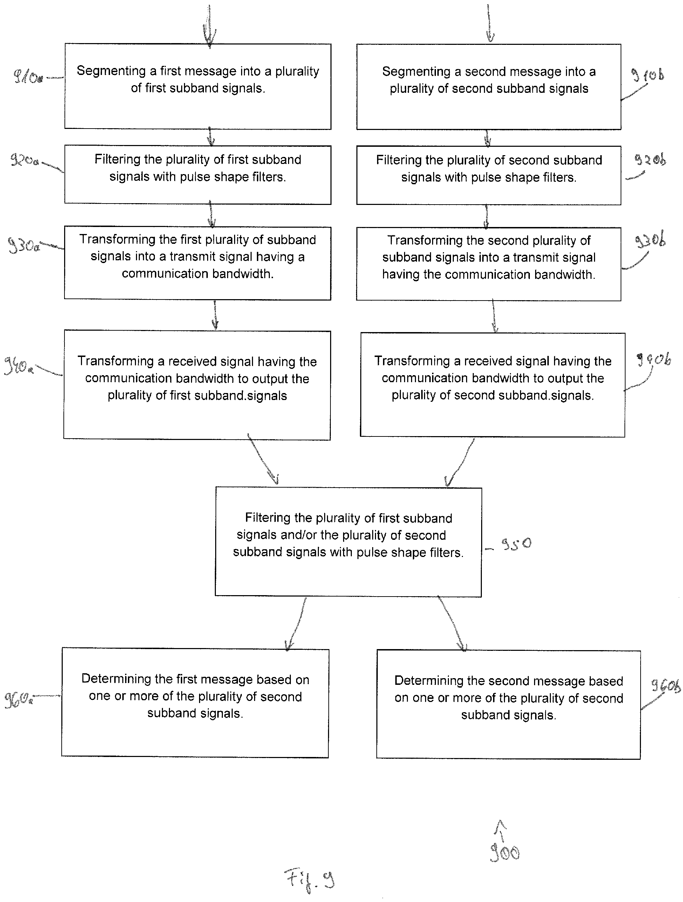

Fig. 9 illustrates a method 900 for transmitting and receiving messages comprising segmenting 910a a first message into a plurality of first subband signals, filtering 920a the plurality of first subband signals with pulse shape filters and transforming 930a the first plurality of subband signals into a transmit signal having a communication bandwidth. Moreover, the method 900 comprises segmenting 910b a second message into a plurality of second subband signals, filtering 920b the plurality of second subband signals with pulse shape filters and transforming 930b the second plurality of subband signals into a transmit signal having the communication bandwidth, wherein each of the plurality of first subband signals have a first bandwidth and each of the plurality of second subband signals have a second bandwidth, different from the first bandwidth and wherein the communication bandwidth is larger than or equal to the first bandwidth and/or the second bandwidth. Furthermore, the method 900 comprises transforming 940 a received signal having the communication bandwidth to output the plurality of first subband signals and transforming 940b the received signal to output the plurality of second subband signals. Further, the method 900 comprises filtering 950 the plurality of first subband signals and/or the plurality of second subband signals with pulse shape filters. Moreover, the method 900 comprises determining 960a the first message based on one or more of the plurality of first subband signals and determining 960b the second message based on one or more of the plurality of second of subband signals. The order in which the method steps are shown here is not restrictive. Further, the method 900 may be performed by a communication system according to the communication system 600.

### Further aspects and conclusions

It has been found that variable subcarrier bandwidth in a Non-orthogonal waveform transmission system provides a flexibility of subcarrier width for more robust transmissions in high mobility vehicular environment in presence of frequency offsets and errors. It has further been found that a Non-orthogonal waveform receiver may mitigate a self-generated inter carrier interference with iterative cancellation. Ideas underlying embodiments improve achievable capacity compared to (conventional) OFDM systems in high velocity scenarios.

It has further been found that for high mobility vehicular communications, Doppler and other frequency errors are a problem in traditional OFDM/LTE systems. Therefore, an idea underlying embodiments is to have variable subcarrier width along with non-orthogonal waveform transmissions with subcarrier wise pulse shaping technique with reduced out of band leakage. A further idea underlying embodiments is that iterative interference cancellation at the receiver removes self-generated ICIs (inter carrier interferences) and improves system performance compared to existing technologies.

Embodiments relate to incorporating an adaptive and flexible subcarrier bandwidth for OFDM based non orthogonal waveform and/or a variable/flexible subcarrier bandwidth for non-orthogonal waveform in robust vehicular communication. Moreover, embodiments relate to wireless communication, digital or optical communications involving modulated signals/waveforms. Furthermore, embodiments relate to adaptive subcarrier width for non-orthogonal transmissions with iterative Interference cancellation in vehicular scenarios. An idea underlying embodiments is mitigating Doppler and other frequency errors in high velocity communications with adaptive subcarrier width and non-orthogonal transmission technique.

In embodiments an OFDM based non-orthogonal waveform transmission system, a P-OFDM transmitter is designed with flexible subcarrier bandwidth. A total system bandwidth (communication bandwidth) is divided into 'N' sub systems, each with a separate number of subcarriers (power of 2, 4, 8, 16 etc.). A loss of orthogonality due to this, is added onto the non-orthogonality present due to pulse shaping of subcarriers in P-OFDM transmitter.

In embodiments each inverse fast fourier transform (IFFT) spans the entire system bandwidth by using the same sampling period. In each IFFT, (N1, N2, N3, etc) denotes the number of sub carriers, where larger numbers generate narrower sub carriers bandwidths. It can be noted that only a fraction of the subcarriers in each IFFT may be activated (the number of active sub carriers in each IFFT can be made to vary), and that the active sub carriers of the different groups may be selected such that the frequency band spanned by the different groups do not overlap. A user is preferably allocated to a particular sub carrier group, whose sub carrier bandwidth suits the requirement of the user's conditions optimally. In embodiments a receiver (e.g., a mobile device a non-base station device) having a flexible FFT can be implemented as a user will need only one type of sub carrier at a time, while at the base station as many IFFTs as there are sub carrier types may be used. The time frequency diagram of the signal can be represented as in Fig. 3.

In embodiments an interference mitigation performed at the receiver may cancel the self-interference due to the non-orthogonal subcarriers and also the interference due to the effect of variable subcarrier width. In embodiments advanced receivers (i.e. receiver methods) like MMSE (minimum mean squared error) or decision feedback receivers may be able to reduce the interference between the subcarriers and the bands. For better performance, in embodiments turbo equalizers may be used to mitigate the ICI (inter carrier interference) and ISI (inter symbol interference). In embodiments an iterative interference canceler at the receiver may give theoretical BER (bit error rate) performance. In presence of frequency errors and Doppler spread, the capacity of this scheme, employed in embodiments, my bet better than that of OFDM or P-OFDM.

Furthermore, embodiments yield a reduced peak-to-average power ratio (PAPR) and are more robust to frequency errors. Moreover, in embodiments iterative interference cancellation techniques at the Rx (receiver) for Non-orthogonal waveforms removes (or reduces) the self-interference created by variable subcarrier bandwidths. Furthermore, embodiments according to the invention in high mobility vehicular scenarios or asynchronous MTC (machine type communication) scenarios, using differential subcarrier P-OFDM or OFDM based non orthogonal waveforms lead to higher (channel) capacity than that of standard OFDM suffering from frequency offsets in the mentioned scenarios.

According to aspects of the invention the pulse shape filters may be combined with the frequency transformer using a polyphase network, i.e. a discrete fourier transform filterbank (see P. P. Vaidyanathan, Multirate systems and filter banks, Prentice Hall, Englewood Cliffs, 1993). Moreover, the pulse shape filters may be applied after upsampling of the message in a transmitter such that the upsampled message is a weighted unit impulse train with zeros in between the unit impulses, wherein the number of zeros corresponds to a upsampling rate. Furthermore, in embodiments of receivers and transmitters the order in which pulse shape filters and frequency transformer are arranged can be changed (e.g. by using a filter bank for the pulse shape filters, e.g. using modulated prototype filters).

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The apparatus described herein, or any components of the apparatus described herein, may be implemented at least partially in hardware and/or in software.

The methods described herein may be performed using a hardware apparatus, or using a computer, or using a combination of a hardware apparatus and a computer.

The methods described herein, or any components of the apparatus described herein, may be performed at least partially by hardware and/or by software.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. A receiver (100; 200; 630) comprising:
a frequency transformer (110; 210);
wherein the frequency transformer (110; 210) is configured to transform a received signal (102; 201; 202; 632) having a communication bandwidth (CB) to output a plurality of first subband signals (112a-b; 212) each having a first bandwidth (SCB1), and
wherein the frequency transformer (110; 210) is configured to transform the received signal (102; 201; 202; 632) to output a plurality of second subband signals (114a-b; 212) each having a second bandwidth (SCB2),
wherein the first bandwidth (SCB1) and the second bandwidth differ (SCB2), and
wherein the receiver is configured to filter the plurality of first subband signals (112a-b; 212) or the plurality of second of subband signals (114a-b; 212) with pulse shape filters (115; 215),
wherein the receiver (100; 200; 630) is configured to determine a first message (122; 222; 612) based on one or more of the plurality of first subband signals (112a-b; 212), and
wherein the receiver is configured to determine a second message (124; 222; 614) based on one or more of the plurality of second subband signals (114a-b; 212),
wherein the communication bandwidth (CB) is larger than or equal to the first bandwidth (SCB1) and/or the second bandwidth (SCB2).

2. Receiver (200; 630) according to claim 1, wherein the receiver is configured to remove a first signal component from the received signal (201; 202; 632), wherein the first signal component is based on the first message (222), to obtain an enhanced received signal, and
wherein the receiver (200; 630) is configured to provide the plurality of second of subband signals based on the enhanced received signal.

3. Receiver (200; 630) according to claim 1 or claim 2, wherein the pulse shape filters (215) are of rectangular shape or of bell shape.

4. Receiver (200; 630) according to one of the claims 1 to 3, wherein the receiver (200; 630) is configured to filter subband signals of the plurality of first subband signals and/or of the plurality of second subband signals with equalization filters (215).

5. Receiver (100; 200; 630) according to one of the claims 1 to 4, wherein for receiving the first message the frequency transformer (110; 210) is configured to operate on a basis of a first transformation length, and wherein the first transformation length is configured according to a number of the plurality of first subband signals, and/or
wherein for receiving the second message the frequency transformer (110; 210) is configured to operate on a basis of a second transformation length, and wherein the second transformation length is configured according to a number of the plurality of second subband signals.

6. Receiver (100; 200; 630) according to claim 5, wherein the receiver (100; 200; 630) is configured to select the first transformation length and the second transformation length based on a predefined first transformation length and a predefined second transformation length, or
wherein the receiver (100; 200; 630) is configured to obtain the first transformation length and/or the second transformation length from the received signal (102; 201, 202; 632).

7. Receiver (100; 200; 630) according to claim 5 or claim 6, wherein the frequency transformer (110; 220) is configured to adjust the transformation length according to a number of subband signals, or
wherein the receiver comprises a first frequency transformer operating on a basis of the first transformation length configured to obtain the first plurality of subband signals, and
wherein the receiver comprises a second frequency transformer operating on a basis of the second transformation length configured to obtain the second plurality of subband signals.

8. Receiver (100; 200; 630) according to one of the claims 1 to 7, wherein the plurality of first subband signals and the plurality of second subband signals each cover frequencies which are overlapping.

9. Receiver (100; 200; 630) according to one of the claims 1 to 8, wherein dividing the communication bandwidth (CB) by the first bandwidth (SCB1) or by the second bandwidth (SCB2) yields an integer number.

10. A transmitter (400; 500; 610, 620) for transmitting a message comprising a frequency transformer (420; 520),
wherein the frequency transformer (420; 520) is configured to transform the message into a transmit signal (440; 540; 614; 624) having a communication bandwidth (CB),
wherein the frequency transformer (420; 520) is configured to selectively segment the transmit signal (440; 540; 614; 624) into a plurality of first subband signals, or into a plurality of second subband signals,
wherein the transmitter is configured to filter the plurality of first subband signals or the plurality of second of subband signals with pulse shape filters (415; 515),
wherein each of the plurality of first subband signals have a first bandwidth (SCB1) and wherein each of the plurality of second subband signals have a second bandwidth (SCB2) different from the first bandwidth (SCB1).

11. Transmitter (400; 500; 610, 620) according to claim 10, wherein the transmitter (400; 500; 610, 620) is configured to segment the transmit signal into the plurality of first subband signals or into the plurality of second subband signals, based on a predefined transformation length of the frequency transformer (420; 520).

12. Transmitter (400; 500; 610, 620) according to claim 10, wherein the transmitter (400; 500; 610, 620) is configured to segment the transmit signal (440; 540; 614; 624) into the plurality of first subband signals or into the plurality of second subband signals, based on a channel state information.

13. Transmitter (400; 500; 610, 620) according to claim 12, wherein the channel state information comprises information about usage of the communication bandwidth (CB).

14. Transmitter (400; 500; 610, 620) according to claim 12 or claim 13, wherein the channel state information comprises channel fading information.

15. Transmitter according to one of the claims 10 to 14, wherein the pulse shape filters (415; 515) are of rectangular shape or of bell shape.

16. Transmitter (400; 500; 610, 620) according to one of the claims 10 to 15, wherein the plurality of first subband signals and the plurality of second subband signals each cover frequencies which are overlapping.

17. Transmitter (400; 500; 610, 620) according to one of the claims 10 to 16, wherein dividing the communication bandwidth (CB) by the first bandwidth (SCB1) or by the second bandwidth (SCB2) yields an integer number.

18. Communication system (600) for transmitting and receiving messages (612, 622) comprising
a receiver (630) according to one of the claims 1 to 9, and
a first transmitter (610), transmitting a first message (612) in a transmit signal (614) having a communication bandwidth (CB) in a plurality of first subband signals, and a second transmitter (620), transmitting a second message (622) in a transmit signal (624) having the communication bandwidth (CB) in a plurality of second subband signals.

19. Communication system (600) according to claim 18, wherein the first transmitter (610) and/or the second transmitter (620) is/are a transmitter (400; 500) according to one of the claims 10 to 17.

20. Method (700) for receiving messages (122, 124; 222; 612, 622), comprising:
transforming (710) a received signal having a communication bandwidth (CB) to output a plurality of first subband signals each having a first bandwidth (SCB1), and
transforming (720) the received signal to output a plurality of second subband signals each having a second bandwidth (SCB2),
wherein the first bandwidth (SCB1) and the second bandwidth differ (SCB2),
filtering (730) the plurality of first subband signals or the plurality of second of subband signals with pulse shape filters (115; 215), and
determining (740) a first message (122; 612) based on one or more of the plurality of first subband signals (112), and
determining (750) a second message (124; 622) based on one or more of the plurality of second subband signals (114),
wherein the communication bandwidth (CB) is larger than or equal to the first bandwidth (SCB1) and/or the second bandwidth (SCB2).

21. Method (800) for transmitting a message (401; 501; 612, 622), comprising:
selectively segmenting (810) the message into a plurality of first subband signals, or into a plurality of second subband signals,
filtering (820) the plurality of first subband signals or the plurality of second of subband signals with pulse shape filters (115; 215),
transforming (830) the plurality of first subband signals or the plurality of second subband signals (401; 501; 612, 622) into a transmit signal (440; 540; 614, 624) having a communication bandwidth (CB),
wherein each of the plurality of first subband signals have a first bandwidth (SCB1) and wherein each of the plurality of second subband signals have a second bandwidth (SCB2) different from the first bandwidth (SCB1).

22. Method (900) for transmitting and receiving messages (122, 124; 222; 401; 501; 612, 622), comprising:
segmenting (910a) a first message into a plurality of first subband signals,
filtering (920a) the plurality of first subband signals with pulse shape filters (115; 215),
transforming (930a) the first plurality of subband signals into a transmit signal having a communication bandwidth (CB),
segmenting (910b) a second message into a plurality of second subband signals,
filtering (920b) the plurality of second subband signals with pulse shape filters (115; 215),
transforming (930b) the second plurality of subband signals into a transmit signal having the communication bandwidth (CB),
wherein each of the plurality of first subband signals have a first bandwidth (SCB1) and wherein each of the plurality of second subband signals have a second bandwidth (SCB2) different from the first bandwidth (SCB1), and wherein the communication bandwidth (CB) is larger than or equal to the first bandwidth (SCB1) and/or the second bandwidth (SCB2)
transforming (940a) a received signal having the communication bandwidth (CB) to output the plurality of first subband signals, and
transforming (940b) the received signal to output the plurality of second subband signals,
filtering (950) the plurality of first subband signals and/or the plurality of second of subband signals with pulse shape filters (115; 215),
determining (960a) the first message based on one or more of the plurality of first subband signals, and
determining (960b) the second message based on one or more of the plurality of second of subband signals.

23. Computer program with a program code for performing a method according to one of the claims 20 to 22, when the computer program runs on a computer or a microcontroller.
